# EUROPEAN PATENT APPLICATION

(11) **EP 2 805 656 A1**
(43) Date of publication of application: **26.11.2014**
(21) Application number: 13168624.8
(22) Date of filing: 21.05.2013
(51) Int. Cl.: A47J 45/06

(54) **Kitchenware with thermochromic and photochromic inks applied in high visibility areas as thermal state indicator mechanism**

(71) Applicant: Landers y Cia S.A., Medellin (CO)
(72) Inventor: Juan Tahta, Alexis, Medellín (CO); Restrepo Zea, Alejandro, Medellín (CO)
(74) Representative: Curell Suñol S.L.P.

(57) **Abstract**

Kitchenware comprising thermochromic and photochromic inks in zones of high visibility for the user are disclosed, as a mechanism to know by simple observation their thermal state (cold or hot), independently if said kitchenware is used outdoors (under sunlight exposure) or in enclosed areas. Said kitchenware corresponds to pots, frying pans, cooking pots, pressure cookers, etc. able to be in direct or indirect contact with a thermal energy source and therefore able to reach a dangerous temperature for the physical integrity of the persons handling it. Thermochromic and photochromic inks are applied in zones of the kitchenware where the user may easily see the color change during use, as in zones where there is no direct contact with food. This novel system allows using safely that kitchenware showing variable temperature during their manipulation and use, independently if it is outdoors (under sunlight exposure) or in enclosed areas, also achieving a greater useful life of the incorporated thermochromic and photochromic points due to their strategic localization in the kitchenware.

## Description

The present invention refers to kitchenware (pots, frying pans, cooking pots, pressure cookers or any other kitchenware whose use implies having direct or indirect contact with a thermal energy source and that may reach a temperature that is dangerous for the physical integrity of the persons manipulating it) comprising thermochromic and photochromic inks applied in areas of high visibility for the user and are not in direct contact with food, as an indicator mechanism of the temperature of said kitchenware that is easily observable by the user and therefore allows eliminating or at least reducing accidental burns, independently if said kitchenware is used outdoors (under sunlight exposure) or in enclosed areas.

### Technical Background

Thermochromic inks are chemical substances characterized because they undergo a color change (reversible or irreversible) as a result of a temperature change. Generally, printed thermochromic inks are colored under the transition temperature and change to transparent or to a clearer color when they are heated above the transition temperature range.

These inks are available in several colors and activation temperatures, being the activation temperature the temperature above which the ink changes completely to its final transparent or clear color point. Color starts changing approximately at 4° C below the activation temperature. Examples of activation temperatures are 15 °C, 31 °C and 45°C. However, nowadays thermochromic inks with activation temperatures in the range between -5°C and 65°C are known.

If the color change is irreversible, the thermochromic inks recover their original color after being submitted to a cooling process which allows reducing the temperature below the transition temperature. However, if color change is irreversible, only one color change may be present.

Both types of thermochromic inks have different uses in industry and research. Then, for instance, the irreversible thermochromic inks are useful for proving that a product has not been submitted to any extreme temperature during transport and/or storage, or to corroborate that a surgical instrument has been submitted to an efficient sterilization process. On the other hand, reversible thermochromic inks are mainly used as optical indicators in drinks, equipment and medicines, as well as in applications related to advertisement, because the color change that they may undergo when in contact with an energy source as the body heat allows it to be used in books, cards and envelopes of great attraction for the general public.

On the other hand, photochromic inks are characterized because they change color when they are exposed to sunlight or UV light. In its natural state are colorless or invisible and when they are exposed to heat they turn visible. However, said change is reversible because the photochromic inks turn back to their original colorless state once they are separated of the light source.

Photochromic inks are mainly used in trademark and specific products marketing, given that its verification is immediate and it does not require any special equipment, only sunlight exposure.

Now, while the use of photochromic inks adhered to kitchenware surface is not known in the state of the art, regarding the use of thermochromic inks as optical indicators of the thermal state of said kitchenware, French patent FR 1388029 teaches kitchenware -for instance, a frying pan-, comprising a thermochromic indicator point on the internal cooking surface as a mechanism to indicate the user that said kitchenware is hot enough and that therefore it is the moment to add the food to be cooked. According to the authors of said prior art document, the invention disclosed there is mainly oriented to be used on kitchenware susceptible of undergoing excessive heating, with the possible consequence of impairing or render useless food submitted to cooking.

Unfortunately, although the application of thermochromic inks on the internal surface of a recipient allows knowing the temperature in the cooking surface, it is absolutely known that its observation by the user is invalid, in practice, once the food to be cooked has been added, with which the warning function of the thermal state of said recipient is completely lost, for the cook and for any other unprepared user, who may be then using it in inappropriate manner leading to potential risks for their physical integrity.

On the other hand, it is also known in the state of the art that there are kitchen recipients which incorporate mechanisms to indicate the internal surface temperature of the recipients, and wherein said mechanisms generally comprise a temperature sensor integrated to the bottom of the kitchenware and connected to an electronic module including a screen to show the temperature measured by the sensor. Said mechanisms allow, indeed, the user to determine the precise moment at which the cooking surface has achieve the proper temperature to cook food, and also warn the user of the thermal state of said kitchenware.

However, the mechanism above is not convenient because of its complexity, especially related to the electric system used, its contact with water or any other fluid is evidently inappropriate.

According to the above, it is absolutely clear that there was a need in the state of the art for developing products for cooking food which allow the optimal use of thermochromic and photochromic inks as temperature indicators, ensuring its full visibility by the user independently if the use is made outdoors or in enclosed areas, and also increasing stability and duration.

### Basic features of the invention

Now, taking into account the teachings of the state of the art above and based on the technical features of the different types of products for cooking food with mechanisms for the determination of the thermal state known so far, the applicant of the studied invention has developed novel kitchenware with thermochromic and photochromic inks applied in high visibility zones as an indicator mechanism of the thermal state.

In this sense, the applicant of the studied invention developed kitchenware comprising thermochromic and photochromic inks in zones of high visibility for the user, as a mechanism to know by simple observation their thermal state (cold or hot), independently if their use is outdoors or in enclosed areas, and wherein said kitchenware corresponds to pots, frying pans, cooking pots, pressure cookers or any other kitchen utensil whose use implies indirect or direct contact with a thermal energy source and that therefore may reach a temperature that is dangerous for the physical integrity of persons manipulating it.

Thermochromic and photochromic inks are applied in zones of the kitchenware where the user may observe easily the change of color during use, as in zones that are not in direct contact with food and where it is convenient to warn the possibility of burns by hot surfaces, which, depending on the type of kitchenware may be in covers, knobs, grippers, handles, flame arrestors, regulator valves for pressure cookers, as in exterior walls that are not in direct contact with the thermal source.

This novel design allows using safely that kitchenware showing variable temperature during manipulation and use, independently if this is outdoors or in enclosed areas, achieving like this a greater useful life of the incorporated thermochromic and photochromic points given their strategic localization in the kitchenware.

### Detailed Description of the Invention

In addition to the outlined above, the object of the present application and the technical advantages achieved by the inventor may be noticed in detail through the following description of the kitchenware comprising thermochromic and photochromic inks in zones of high visibility for the user and that are not in contact with food, referring to the accompanying drawings, wherein:

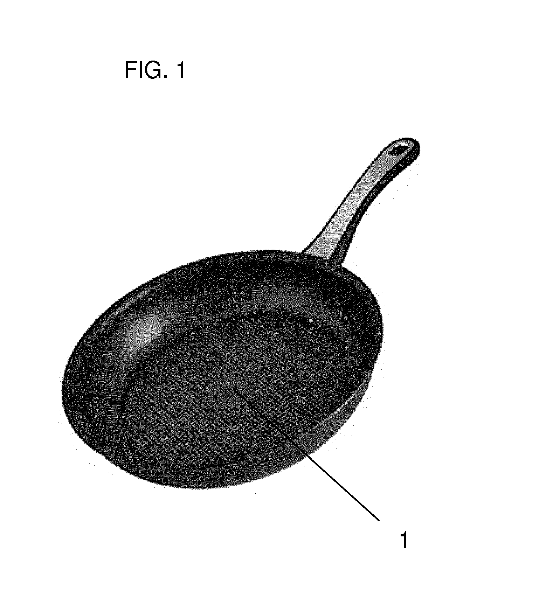

FIGURE 1 is a schematic view of a kitchenware comprising thermochromic inks according to the technique above, wherein the thermochromic ink is applied in the bottom of said kitchenware.

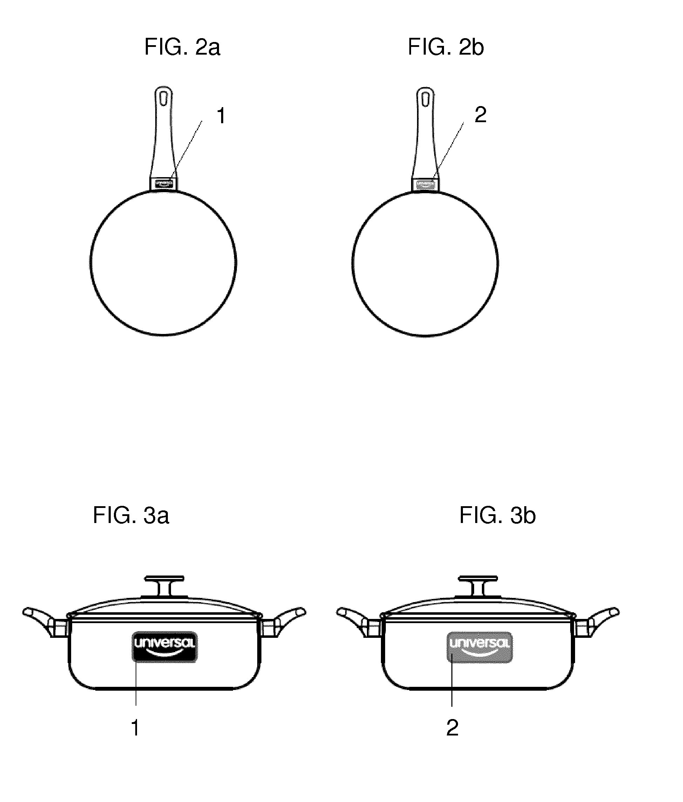

FIGURE 2a is a schematic view of a frying pan according to the present invention, to which thermochromic and photochromic inks have been applied in zones of high visibility for the user and that are not in contact with food, specifically in the flame arrestor and through a sticker. FIGURE 2b is a comparative schematic view of the frying pan when the thermochromic and photochromic inks have changed color because of a temperature or sunlight exposure.
FIGURE 3a is a schematic view of a pot according to the present invention, to which thermochromic and photochromic inks have been applied in zones of high visibility for the user and that are not in contact with food. FIGURE 3b is a comparative schematic view of the pan when the thermochromic and photochromic inks have changed color because of the temperature increase or sunlight exposure.

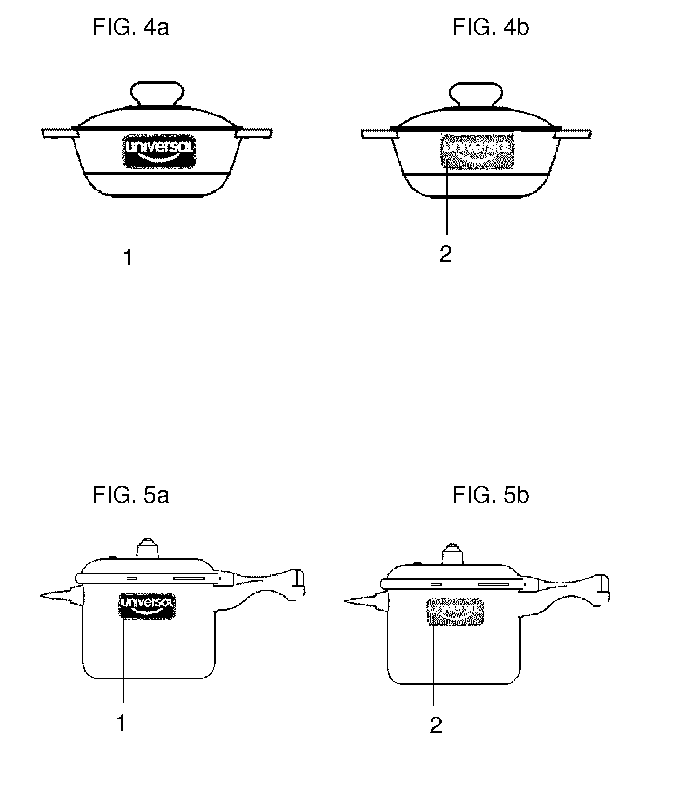

FIGURE 4a is a schematic view of a cooking pot according to the present invention, to which thermochromic and photochromic inks have been applied in zones of high visibility for the user and that are not in contact with food.
FIGURE 4b is a comparative schematic view of the cooking pot when the thermochromic and photochromic inks have changed color because of the temperature increase or sunlight exposure.
FIGURE 5a is a schematic view of a pressure cooker according to the present invention, to which thermochromic and photochromic inks have been applied in zones of high visibility for the user and that are not in contact with food. FIGURE 5b is a comparative schematic view of the pressure cooker when the thermochromic and photochromic inks have changed color because of the temperature increase or sunlight exposure.

In the figures it has been marked with reference 1 the sticker before being exposed to a heat source, and with reference 2 the sticker after being exposed to a heat source and being still at a high temperature, over the activation temperature.

Now, referring to figures 2, 3, 4 and 5 of the application, the thermochromic and photochromic inks may be applied on the kitchenware in one or more zones characterized by being of high visibility for the cook or user and besides because they do not contact the food to be cooked. Preferably, the thermochromic and photochromic inks are applied in between one to four zones of the kitchenware, the above with the purpose of allowing to warn the user about the thermal state of said utensil independently of the position of the utensil or the view angle the user has of it, and independently if it is used outdoors or in enclosed areas.

Kitchenware may be chosen between the group formed by pots, frying pans, cooking pots, pressure cookers and any other kitchen utensil whose use implies having direct or indirect contact with a thermal energy source.

Depending on the type of kitchen utensil, there are different zones where the thermochromic and photochromic inks may be applied without moving aside of the spirit of the invention. Then, for instance, thermochromic and photochromic inks may be applied in one or more zones selected from covers, knobs, grippers, handles, flame arrestors and the exterior walls of the kitchen utensil, as in the regulator valve of the pressure cookers.

Likewise, thermochromic and photochromic inks may be applied in zones where the possibility of burns by hot surfaces should be warned, as in zones where the user may observe the color change of the thermochromic and photochromic inks along the cooking process and in zones that do not have direct contact with food.

The kitchenware may be made of a material selected from aluminum, steel, stainless steel, phenolic resin, polypropylene, ABS, silicate, porcelain or any other material allowing manufacturing a kitchen utensil suitable to be in direct contact with a thermal source.

The photochromic ink applied over one or more zones of the kitchenware may be selected from any material able to pass from a first colorless state or invisible to a second colored state as a consequence or sunlight or UV light exposure, and that is suitable to be applied over a kitchen utensil. On the other hand, the thermochromic ink applied over one or more areas of the kitchen utensil may be selected from polymeric inks, epoxic inks, polyuretane base inks or any other commercially available ink that is suitable to be applied on a kitchen utensil.

Said thermochromic and photochromic inks may be applied using serigraph, pad printing, screen, hot-melt stickers, or any other industrial process allowing their correct adhesion on kitchenware according to the present invention. In this sense, the technique with which the thermochromic and photochromic inks is applied depends on the zone of the kitchen utensil where is applied.

The thermochromic ink applied on one or more zones of the kitchen utensil may show any color or aspect cold and hot, given that the technical objective sought through the present invention is that the cook or user may easily perceive a signal indicating the thermal state of said kitchen utensil, which may be achieved independently of the color observed when cold and hot.

The optical change perceived in the thermochromic ink applied on the kitchenware according to the present invention, after passing the activation temperature may be a change in color or a loss of color and said optical change may be perceived after achieving a temperature in the range between 30 °C and 80 °C, preferably between 45°C and 65°C. Said temperature of activation will depend on the type of thermochromic ink applied.

The thermochromic and photochromic inks may be applied on the kitchenware forming a round, squared, rectangular or any other geometric shape, and also it may be applied on different sizes, depending mainly on the size of the kitchen utensil.

Based on the previously mentioned, it is clear that the kitchenware according to the present invention is characterized by allowing the cook or user to be aware of the thermal state (cold or hot) of said kitchenware by simple observation, independently if the use is outdoors (under sunlight exposure) or in enclosed areas, and independently if the food to cook has been already placed in the cooking area, fact that represents an important advance in the state of the art because the alert mechanism is completely reliable and does not depend on variables such as the position of the kitchen utensil, the view angle of the user and even less of the presence or absence of food in the cooking area.

Likewise, it is very important to remark that, given that the thermochromic and photochromic inks are not applied on the internal surface of the kitchenware, and therefore, do not contact directly the thermal source and the food, their degradation is less compared to those products where the thermochromic ink is applied in the bottom of said kitchenware.

According to the above, the results of the technical tests carried out to compare the degradation that thermochromic and photochromic inks undergo when applied on the internal surface of kitchen utensil and on the zones of said kitchenware are shown below:
Specifically, comparative technical tests were carried out heating different types of food (rice, brown sugar and milk) in a frying pan according to the present invention and in a frying pan with thermochromic indicator point in its internal surface according to the technique above, finding that the thermochromic and photochromic inks applied to the frying pan according to the application remain unaltered after being submitted to a heat source, while the thermochromic indicator point located in the internal surface of the frying pan according to the technique above stains and deteriorates in the case of milk, loses natural color in the case of rice and practically loses color completely in the case of brown sugar.

The above demonstrates that the application of thermochromic and photochromic inks in the zones of kitchenware according to the present invention allows solving the technical problem that there is in the prior state of the art related to fast degradation -and therefore undesirable for the user-of the applied thermochromic ink, and also allows providing safety to the users of said kitchenware independently if they are used outdoors (under sunlight exposure) or in enclosed areas.

On the other hand, from technical tests made with the purpose of analyzing the the behavior or the color of the thermochromic ink related to temperature, it was observed that while the thermochromic points located in the internal surface of the kitchenware according to the technique above stop working at ± 283 °C returning to their natural color, the thermochromic inks applied according to the invention at hand, only change color at their transition temperature (preferably in the range between 45°C and 65°C), allowing then to comply with the purpose of being useful as an optical indicator that is easily observable and realiable of the thermal state of said kitchenware.

## Claims

1. A kitchen utensil **characterized by** comprising a thermochromic ink and a photochromic ink applied in one or more zones of said kitchen utensil that are of high visibility for the user and that do not come into direct contact with food.

2. The kitchen utensil according to claim 1, which is chosen from the group formed by pots, frying pans, cooking pots, pressure cookers and any other kitchenware whose use implies having direct or indirect contact with a thermal energy source, and that additionally may be used outdoors, this is, under sunlight exposure, or in an enclosed area.

3. The kitchen utensil according to any of claims 1 and 2, wherein the thermochromic ink and the photochromic ink are incorporated in the cover of said kitchen utensil.

4. The kitchen utensil according to any of the claims above, wherein the thermochromic ink and the photochromic ink are incorporated in at least one handle of said kitchen utensil.

5. The kitchen utensil according to any of the claims above, wherein the thermochromic ink and the photochromic ink are incorporated in at least one flame arrestor of said kitchen utensil.

6. The kitchen utensil according to any of the claims above, wherein the thermochromic ink and the photochromic ink are incorporated in the regulator valve of a pressure cooker.

7. The kitchen utensil according to any of the claims above, wherein the thermochromic ink and the photochromic ink are incorporated in the exterior walls of said kitchen utensil.

8. The kitchen utensil according to any of the claims above, wherein the thermochromic ink and the photochromic ink are incorporated in at least one knob and/or in at least one gripper of said kitchen utensil.

9. The kitchen utensil according to any of the previous claims, wherein the thermochromic ink changes color or loses color when the zones where they are incorporated reach a temperature in the range between 45 °C and 65 °C.

10. The kitchen utensil according to any of the previous claims, wherein said kitchen utensil is made of a material selected between aluminum, steel, stainless steel, phenolic resin, polypropylene, ABS, silicate or porcelain.

11. The kitchen utensil according to any of the previous claims, wherein the thermochromic ink and the photochromic ink are applied on said kitchen utensil by using serigraph, pad printing, screen, or hot-melt stickers.
